# EUROPEAN PATENT APPLICATION

(11) **EP 2 039 888 A2**
(43) Date of publication of application: **25.03.2009**
(21) Application number: 08164377.7
(22) Date of filing: 15.09.2008
(51) Int. Cl.: F01D 11/00, F01D 11/02, F01D 11/12

(54) **Labyrinth seal with notched tooth**

(30) Priority: 18.09.2007 US 857044
(71) Applicant: Honeywell International Inc., Morristown, NJ 07962 (US)
(72) Inventor: Chougule, Hasham, 400070 Mumbai Maharashtra (IN); Ramerth, Douglas Lyle, Chandler, AZ 85248-1815 (US); Ramachandran, Dhinagaran, 560043 Bangalore Karnataka (IN)
(74) Representative: Buckley, Guy Julian

(57) **Abstract**

Labyrinth seals and methods of manufacturing the seals are provided. In an embodiment, the seal (100) includes a seal base (110) and a first annular tooth (112, 114, 116, 118, 120). The seal base (110) has an outer peripheral surface (124). The first annular tooth (112, 114, 116, 118, 120) extends radially from the seal base (110) outer periperhal surface (124). The first annular tooth (112, 114, 116, 118, 120) includes a forward wall, an aft wall, and a tip wall, and the forward wall (126) and the aft wall (128) each include bottom sections that contact the seal base (110) and angle upwardly toward or substantially parallel to each other. The forward wall (126) has a notch (306, 308) formed therein defined by a shelf wall (134) and a side wall, the shelf wall (134) and side wall (136) join the forward wall (126) to the tip wall, and the aft wall (128) is formed without a notch (306, 308). The side wall (136) and the aft wall (128) extend substantially parallel to each other.

## Description

### TECHNICAL FIELD

The inventive subject matter relates to labyrinth seals and, more particularly, to notched tooth labyrinth seals and methods of manufacturing the seals.

### BACKGROUND

Turbines provide power for aircraft, ground vehicles, and utilities. Typically, a turbine converts potential energy of a working fluid into mechanical energy and/or propulsive thrust. The working fluid may be a liquid at high pressure, a gas at high pressure such as compressed air, or a gas at high temperature and pressure such as combustion gases, or steam. During turbine operation, a portion of the working fluid flows through a turbine along a main flow path that is defined by stationary and rotating parts that include aerodynamic vanes and blades for extracting power. Another portion of the working fluid may follow a secondary flow path used for cooling to maintain mechanical integrity of turbine components. To maintain efficiency of the turbine, various means of sealing the main and secondary flow paths may be included.

The environment in which a turbine seal operates determines the type of seal that may be applied and its useful life. In some cases, a labyrinth seal may be employed, because it is able to withstand high temperatures and pressures and maintain long life while operating at close clearances. Additionally, a labyrinth seal is able to accommodate high relative rotating velocities and tolerate transient rubbing contact where relative motion is produced by thermal growth, centrifugal growth, or vehicle maneuvering.

Labyrinth seals typically include a plurality of annular seal teeth, and a land disposed around and spaced apart from the teeth. Conventional labyrinth seal teeth typically have a triangular cross section. A labyrinth seal leaks when a fluid, such as high pressure air upstream of the seal, flows over the tips of the teeth, undergoing a series of flow contractions and expansions before ejecting into a low pressure cavity downstream of the seal. In many instances, labyrinth seal leakage may be excessive and may become a parasitic loss that may reduce overall efficiency of the engine.

Hence, it is desirable to have a labyrinth seal that has increased sealing capabilities over conventional labyrinth seals. Additionally, it would be desirable for the labyrinth seal to be relatively inexpensive and simple to manufacture. Moreover, it would be desirable for the labyrinth seal to be capable of retrofitting into currently existing engines.

### BRIEF SUMMARY

The inventive subject matter provides labyrinth seals and methods of manufacturing the seals.

In one embodiment, and by way of example only, the seal includes a seal base and a first annular tooth. The seal base has an outer peripheral surface. The first annular tooth extends radially from the seal base outer peripheral surface. The first annular tooth includes a forward wall, an aft wall, and a tip wall, and the forward wall and the aft wall each include bottom sections that angle toward or substantially parallel to each other. The forward wall has a notch formed therein defined by a shelf wall and a side wall, the shelf wall and side wall join the forward wall to the tip wall, and the aft wall is formed without a notch. The notch side wall and the aft wall extend substantially parallel to each other.

In another embodiment, and by way of example only, the seal includes a land, a seal base, and a first annular tooth. The seal base is disposed proximate the land and has an outer peripheral surface. The first annular tooth extends radially from the seal base outer peripheral surface toward the land and includes a forward wall, an aft wall, and a tip wall, and the forward wall and the aft wall each includes bottom sections that angle towards or substantially parallel to each other. The forward wall has a notch formed therein defined by a shelf wall and a side wall, the shelf wall and side wall join the forward wall to the tip wall, and the aft wall is formed without a notch. The notch side wall and the aft wall extend substantially parallel to each other.

In still another embodiment, by way of example only, a method of manufacturing the seal is included. The method includes forming a first annular tooth on an outer peripheral surface of a base, forming a forward wall, an aft wall, and a tip wall, the forward wall and the aft wall each including bottom sections that angle toward or substantially parallel to each other, and cutting a notch into the forward wall, the notch defined by a shelf wall and a side wall, the shelf wall and side wall joining the forward wall to the tip wall, the aft wall formed without a notch, and the notch side wall and the aft wall extending substantially parallel to each other.

Other independent features and advantages of the preferred labyrinth seal and method of manufacturing the seal will become apparent from the following detailed description, taken in conjunction with the accompanying drawings which illustrate, by way of example, the principles of the inventive subject matter.

### BRIEF DESCRIPTION OF THE DRAWINGS

FIG. 1 is a cross-sectional view of a labyrinth seal disposed between a first cavity and a second cavity, according to an embodiment;

FIG. 2 is a close up view of an annular tooth of a labyrinth seal, according to an embodiment;

FIG. 3 is a close up view of an air flow pattern through a labyrinth seal, according to an embodiment;

FIG. 4 is a front view of teeth from a baseline seal, according to an embodiment;

FIG. 5 is a front view of teeth from a notched seal, according to an embodiment; and

FIG. 6 is a graph comparing the baseline seal and the seal.

### DETAILED DESCRIPTION OF A PREFERRED EMBODIMENT

The following detailed description of the inventive subject matter is merely exemplary in nature and is not intended to limit the inventive subject matter or the application and uses of the inventive subject matter. Furthermore, there is no intention to be bound by any theory presented in the preceding background or the following detailed description.

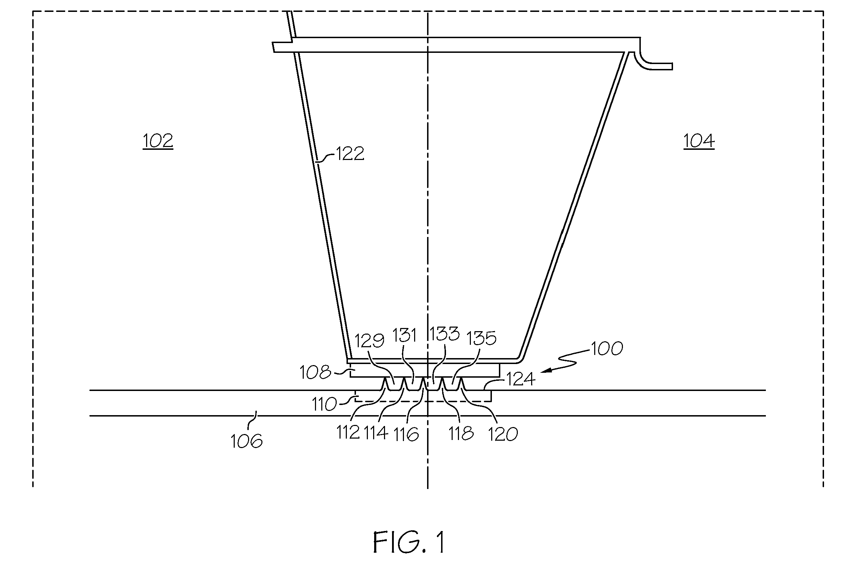

FIG. 1 is a cross-sectional view of a labyrinth seal 100 disposed between a first cavity 102 and a second cavity 104, according to an embodiment. Although seal 100 is shown in FIG. 1 as being mounted to a shaft 106, it may alternatively be mounted or formed on inserts, rings, couplings, disks, blade tip shrouds or other components. First cavity 102 is a cavity upstream of seal 100, and is also referred to as the higher pressure side of seal 100. Second cavity 104 is downstream of seal 100 and is typically referred to as the lower pressure side. Leakage may occur from first cavity 102 to second cavity 104.

Labyrinth seal 100 separates first cavity 102 from second cavity 104 and is made up of a land 108, a seal base 110, and at least one annular tooth such as, in an embodiment, depicted as 112, 114, 116, 118, 120. Land 108 may be attached to a backing ring (not shown) that is attached to a support housing 122 and is configured to extend axially along and form a close clearance (e.g. 0.05-1 mm) with teeth 112, 114, 116, 118, 120. In an embodiment in which teeth 112, 114, 116, 118, 120 may grow radially into land 108 during seal operation, land 108 may be further configured to provide a surface against which the teeth 112, 114, 116, 118, 120 may have transient contact. Thus, land 108 may include a plurality of honeycomb cells formed thereon and may have a depth. For example, land 108 may be made of a honeycomb ribbon or similarly configured material. In an embodiment, land 108 may have a height measurement of between about 1 mm and about 10 mm. In another embodiment, land 108 may have a height measurement that is substantially equal to a tooth height.

Seal base 110 is disposed on shaft 106 to thereby rotate therewith during engine operation. Although shown as being integrally formed as part of shaft 106, seal base 110 may alternatively be a separately formed component that may be mounted to shaft 106 (as indicated in phantom). Seal base 110 has an outer peripheral surface 124 from which the annular teeth 112, 114, 116, 118, 120 extend radially. Cells 129, 131, 133, 135 are defined between adjacent annular teeth 112, 114, 116, 118, 120. In an embodiment, each cell may have a width of between about 2 mm and about 20 mm. Although five annular teeth 112, 114, 116, 118, 120 are shown in this embodiment, as few at one tooth or many more teeth may alternatively be employed. Although each tooth 112, 114, 116, 118, 120 is depicted as having substantially equal heights, it will be appreciated that in other embodiments, such as for stepped labyrinth seals, they may have varying heights.

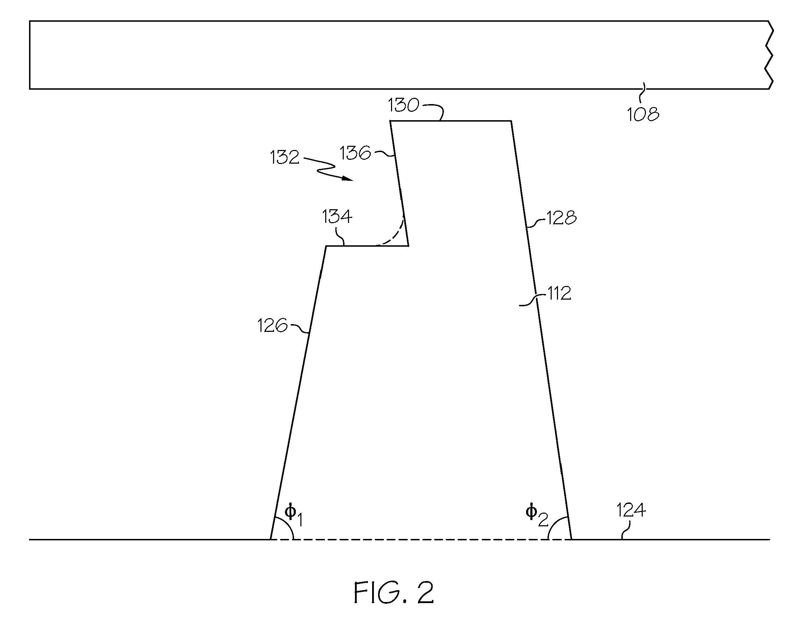

Turning to FIG. 2, a close up view is provided of an annular tooth 112, according to an embodiment. Annular tooth 112 is configured to operate with land 108 to substantially prevent fluid leakage from first cavity 102 to second cavity 104. Annular tooth 112 includes a forward wall 126, aft wall 128, and a tip wall 130. In an embodiment, forward wall 126 and aft wall 128 join base 110 and may angle toward or may be parallel to each other. In another embodiment, angle Φ₁ measured inward toward annular tooth 112 between forward wall 126 and outer peripheral surface 124 may be either less than or greater than an angle Φ₂ measured inward toward annular tooth 112 between aft wall 128 and outer peripheral surface 124. In an embodiment, angle Φ₁ may be less than angle Φ₂ by as much as 20 degrees. In another embodiment, angle Φ₁ may be greater than angle Φ₂ by as much as 30 degrees. In still another embodiment, each angle Φ₁, Φ₂ may be less than 90 °. Teeth 112 may each have a height measurement from seal base 110 to tip wall 130 of between about 1 mm and about 20 mm. It will be appreciated that the height measurement of teeth 112 may be greater than 20 mm, in other embodiments.

As shown in FIG. 2, forward wall 126 includes a notch 132 formed therein. Notch 132 is configured to cause air flowing from an area immediately adjacent forward wall 126 of annular tooth 112 into notch 132 to produce a vortex therein. In an embodiment, notch 132, which is defined by a shelf wall 134 and a side wall 136, has a height that comprises between about 5% and 75% of a distance between tip wall 130 and base 110. Shelf wall 134 and side wall 136 also join forward wall 126 to tip wall 130. Although shelf wall 134 and side wall 136 include a sharp corner there between, the corner may alternatively be rounded (shown in phantom).

In an embodiment, shelf wall 134 has a length that is greater than a distance between side wall 136 and aft wall 128. In another embodiment, shelf wall 134 has a length that is between about 40% and about 600% of the distance between side wall 136 and aft wall 128. In still another embodiment, side wall 136 may have a length that is between about 5% to about 75% of a length of aft wall 128. In an embodiment, the length of side wall 136 may be unequal to the length of aft wall 128. Side wall 136 may be substantially parallel to a top section of aft wall 128, which does not have a notch therein, to thereby maintain a substantially constant distance there between. In another embodiment, the distance measurement between side wall 136 and aft wall 128 may be substantially equal to (e.g. ± 5%) a length of tip wall 130. Although annular tooth 112 is depicted as incorporating the features mentioned above, it will be appreciated that the other annular teeth (e.g. annular teeth 114, 116, 118, 120), or any other annular teeth extending from the seal base 106, may alternatively or additionally be similarly configured.

Labyrinth seal 100 may be manufactured by forming an annular tooth on the inner or outer surface of a hollow shaft. The seal teeth may be made of a material capable of enduring transient rubs to at least 75% of the land depth. Examples of suitable materials include, but are not limited to non-metallic and metallic materials such as alloys of aluminum, steel, nickel, and cobalt. The seal teeth may be, as briefly mentioned above, part of shaft 106 or a separately formed component such as a ring, solid shaft, insert, coupling, disk, blade tip shroud and the like. The annular tooth may be formed with a forward wall, aft wall, and tip wall, with the forward wall and aft wall parallel to or angling towards each other. A notch may be formed in the forward wall. The notch may be defined by a shelf wall and a side wall, wherein these walls join the forward wall to the tip wall. The annular tooth may also be formed such that the aft wall is formed without a notch, and the notch side wall and the aft wall extend substantially parallel to each other and in a direction toward the direction along which the forward wall bottom section extends. The notch may be formed while forming the annular tooth.

In an embodiment, the step of forming the forward wall, aft wall and tip wall may include forming the forward wall and the aft wall such that a first angle is measured inwardly toward the annular tooth between the tooth forward wall and the seal base, a second angle is measured inwardly toward the annular tooth between the tooth aft wall and the seal base, and the first angle is less or greater than the second angle. In another embodiment, the step of cutting the notch into the forward wall may include cutting the notch shelf wall such that the notch shelf wall has a length that is greater than about 40% of a distance between the notch side wall and the aft wall.

In another embodiment of the manufacturing method, a second annular tooth may be formed that extends radially from the seal base outer peripheral surface and spaced apart from the first annular tooth to define a cell there between. The second annular tooth may be spaced apart from the first annular tooth by a distance of between about 1 mm and about 20 mm. In yet still another embodiment, the step of forming the second annular tooth may include forming the second annular tooth to include a forward wall, an aft wall, and a tip wall, where the forward wall and the aft wall each including bottom sections that angle towards each other, and forming a notch in the forward wall, where the notch is defined by a shelf wall and a side wall, which join the forward wall to the tip wall. The aft wall is formed without a notch, and the notch side wall and the aft wall extend substantially parallel to each other and in a direction toward the direction in which the forward wall bottom section extends.

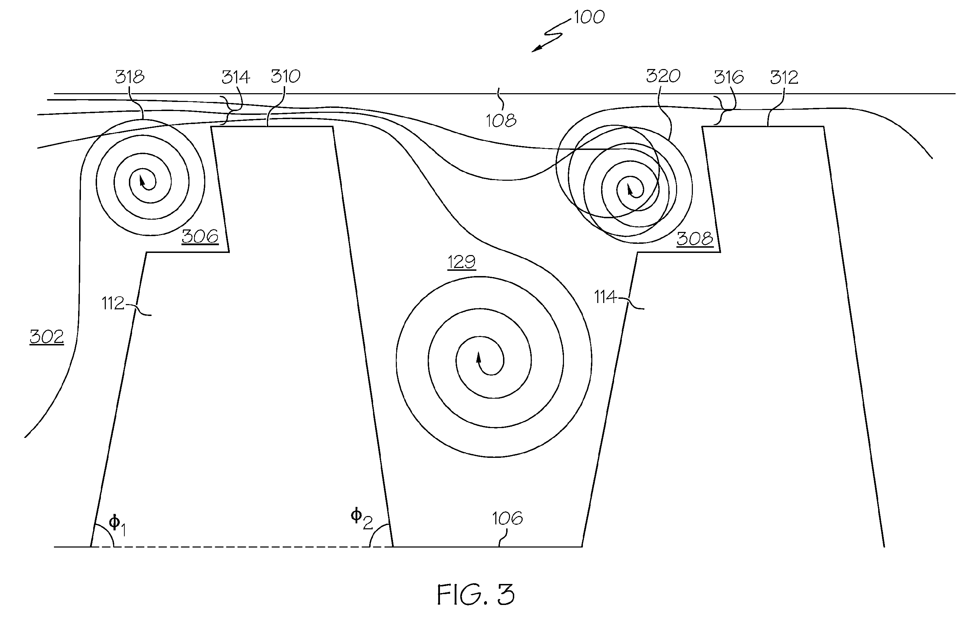

Turning to FIG. 3, a close up view of an air flow pattern through a labyrinth seal 100 is provided, according to an embodiment. Labyrinth seal 100 includes two adjacent annular teeth 112, 114 mounted to a shaft 106. An inlet area 302 is disposed upstream of first annular tooth 112, while a cell 129 is formed between adjacent annular teeth 112, 114. Each annular tooth 112, 114 includes a notch 306, 308, respectively. Additionally, each annular tooth 112, 114 includes a tip wall 310, 312 that forms a running clearance 314, 316, respectively, with land 108.

During operation, shaft 106 rotates and land 108 may be stationary, in an embodiment. Alternatively, shaft 106 may be stationary and land 108 may rotate. In still another embodiment, shaft 106 and land 108 may co-rotate or may counter-rotate. In any case, air flowing across seal 100 enters inlet area 302 at a pressure. When the air enters notch 306 of first tooth 112, air turbulence therein increases and creates a vortex 318. A portion of the air may become trapped in vortex 318. The tendency of vortex 318 to expand may also inhibit air from flowing into running clearance 314 of first annular tooth 112. Another portion of the air not trapped in vortex 318 may continue to flow into cell 129 at a pressure lower than that of the air in vortex 318. However, when the air enters second notch 308 on second annular tooth 114, a second vortex 320 may be produced therein preventing the air from flowing into running clearance 316 between second annular tooth 114 and land 108. If seal 100 includes more annular teeth, the air flows in a similar manner across each successive annular tooth.

The following example is presented in order to provide a more complete understanding of the inventive subject matter. The specific techniques, conditions, materials and reported data set forth as illustrations, are exemplary, and should not be construed as limiting the scope of the inventive subject matter.

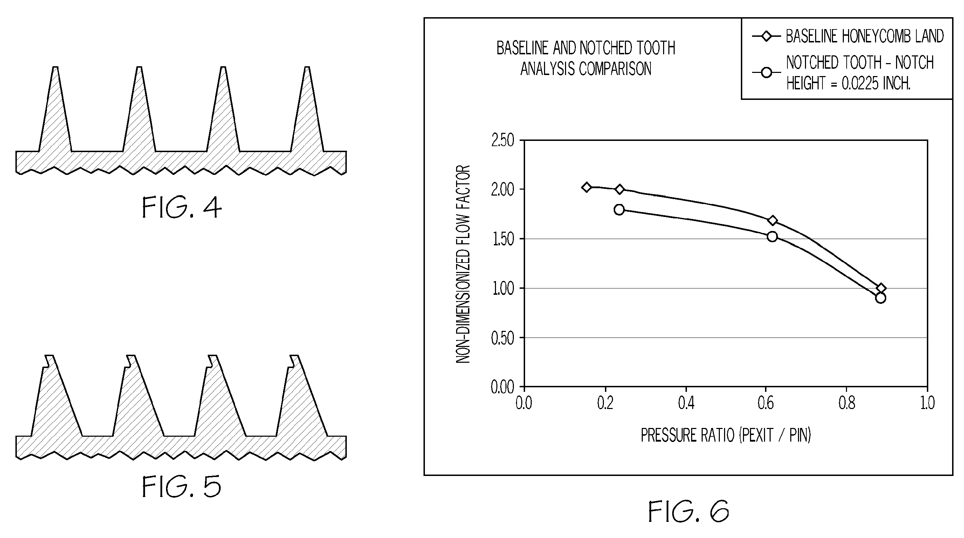

In an example, a baseline seal was compared to a notched seal, which was constructed according to the above description. The baseline seal had a honeycomb cell size of 0.03125 inch (0.7935 mm) and a radial clearance of 0.00515 inch (0.1308 mm). Tooth pitch and height were both equal to 0.15 inch (3.81 mm), while tooth tip thickness was 0.014 inch (0.3556 mm). The baseline seal had four teeth. The notched seal was configured such that the height of each of the notches was 0.0225 inch (0.5715 mm), i.e. 15% of baseline tooth height. FIGs. 4 and 5 show front views of the teeth of the baseline seal and the notched teeth of the notched seal.

A computational fluid dynamic (CFD) analysis was performed using CFD software that solved discretized Navier-Stokes equations applied in the form of finite element equations on a fine mesh of the air volume to determine flow velocity values, given inlet pressure and temperature values, exit pressure values, and other quantities representing the characteristics of air. These results were incorporated into the graph shown in FIG. 6. The horizontal axis of the graph shows an exit pressure over inlet pressure (e.g., the pressure ratio) over a range. The vertical axis of the graph shows a range of flow factors, which may be defined as a flow rate of the air times square root of temperature divided by inlet pressure. The flow rates were non-dimensionalized and the data was fitted to three numerically computed values to form a curve. Computational fluid dynamic analysis shows that the notched seal is more effective in reducing leakage than the baseline seal. In particular, FIG. 6 illustrates leakage is reduced about 10% across all pressure ratios (Pexit/Pinlet) for a notched seal having a notch height of 0.0225 inch (0. 5715 mm).

A labyrinth seal has now been provided that may have increased sealing capabilities over conventional labyrinth seals. Additionally, the labyrinth seal may be relatively inexpensive and simple to manufacture. Moreover, the labyrinth seal may be capable of being retrofitted into currently existing engines.

While the inventive subject matter has been described with reference to a preferred embodiment, it will be understood by those skilled in the art that various changes may be made and equivalents may be substituted for elements thereof without departing from the scope of the inventive subject matter. In addition, many modifications may be made to adapt to a particular situation or material to the teachings of the inventive subject matter without departing from the essential scope thereof. Therefore, it is intended that the inventive subject matter not be limited to the particular embodiment disclosed as the best mode contemplated for carrying out this inventive subject matter, but that the inventive subject matter will include all embodiments falling within the scope of the appended claims.

## Claims

1. A labyrinth seal (100) comprising:
a seal base (110) having an outer peripheral surface (124) ; and
a first annular tooth (112, 114, 116, 118, 120) extending radially from the seal base (110) outer peripheral surface (124) , the first annular tooth (112, 114, 116, 118, 120) including a forward wall (126), an aft wall (128), and a tip wall (130), the forward wall (126) and the aft wall (128) each including bottom sections that contact the seal base (110) and angle upwardly toward or substantially parallel to each other, the forward wall (126) having a notch (306, 308) formed therein defined by a shelf wall (134) and a side wall (136), the shelf wall (134) and side wall (136) joining the forward wall (126) to the tip wall, the aft wall (128) formed without a notch (306, 308), and the side wall (136) and the aft wall (128) extending substantially parallel to each other.

2. The labyrinth seal (100) of claim 1, wherein a first angle is measured inwardly toward the first annular tooth (112, 114, 116, 118, 120) between the forward wall (126) and the seal base (110), a second angle is measured inwardly toward the first annular tooth (112, 114, 116, 118, 120) between the aft wall (128) and the seal base (110), and the first angle is less than the second angle.

3. The labyrinth seal (100) of claim 1, wherein a first angle is measured inwardly toward the first annular tooth (112, 114, 116, 118, 120) between the forward wall (126) and the seal base (110), a second angle is measured inwardly toward the first annular tooth (112, 114, 116, 118, 120) between the aft wall (128) and the seal base (110), and the first angle is greater than the second angle.

4. The labyrinth seal (100) of claim 1, wherein the shelf wall (134) has a length that is greater than about 40% of a distance between the side wall (136) and the aft wall (128).

5. The labyrinth seal (100) of claim 1, wherein the notch (306, 308) has a height that comprises between about 5% and 75% of a distance between the tip wall (130) and the seal base (110) outer peripheral surface (124).

6. The labyrinth seal (100) of claim 1, wherein a distance measurement between the side wall (136) and the aft wall (128) is substantially equal to a length of the tip wall (130).

7. The labyrinth seal (100) of claim 1, further comprising a second annular tooth (112, 114, 116, 118, 120) extending radially from the seal base (110) outer peripheral surface (124) and spaced apart from the first annular tooth (112, 114, 116, 118, 120) to define a cell (129) there between.

8. The labyrinth seal (100) of claim 7, wherein the second annular tooth (112, 114, 116, 118, 120) includes a forward wall (126), an aft wall (128), and a tip wall (130), the forward wall (126) and the aft wall (128) each including bottom sections that contact the seal base (110) and angle upwardly toward or substantially parallel to each other, the forward wall (126) having a notch (306, 308) formed therein defined by a shelf wall (134) and a side wall (136), the shelf wall (134) and side wall (136) joining the forward wall (126) to the tip wall (130), the aft wall (128) formed without a notch (306, 308), and the side wall (136) and the aft wall (128) extending substantially parallel to each other.
